# EUROPEAN PATENT SPECIFICATION

(11) **EP 1 624 941 B1**
(45) Date of publication and mention of the grant of the patent: **11.07.2007**
(21) Application number: 04732721.8
(22) Date of filing: 13.05.2004
(51) Int. Cl.: A63B 22/06, A63B 24/00, G01P 3/40

(54) **GYM BIKE THAT USES THE EFFECT OF STROBOSCOPIC LIGHTS FOR THE IMMEDIATE VISUAL CONTROL OF THE USER'S FLYWHEEL REVOLUTION SPEED**
FITNESS-FAHRRAD, DAS DIE WIRKUNG VON STROBOSCOPISCHER-LICHTERN FÜR DIE UNMITTELBARE SEHKONTROLLE DER SCHWUNGRAD-UMDREHUNGSGESCHWINDIGKEIT DES BENUTZERS GEBRAUCHT
BICYCLETTE D'ENTRAINEMENT UTILISANT L'EFFET DE LUMIERES STROBOSCOPIQUES POUR LA REGULATION VISUELLE IMMEDIATE DE LA VITESSE DE ROTATION DU VOLANT D'INERTIE DE L'UTILISATEUR

(30) Priority: 16.05.2003 IT AN20030028
(43) Date of publication of application: 15.02.2006
(73) Proprietor: Panatta, Rodolfo, 62021 Apiro (MC) (IT)
(72) Inventor: Panatta, Rodolfo, 62021 Apiro (MC) (IT)
(74) Representative: Baldi, Claudio
(86) International application number: PCT/IT2004/000268
(87) International publication number: WO 2004/101077

(56) References cited:
- DE-A- 3 031 313
- US-B1- 6 482 130

## Description

The present patent application refers to a gym bike that uses the effect of stroboscopic lights for the immediate visual control of the user's flywheel revolution speed.

As it is known, gym bikes have undergone deep evolution in the last few years, being converted from a rehabilitation or light training equipment (i.e. traditional stationary bicycles) to a fitness and heavy training equipment (i.e. modern spin-bikes), like described in the documents US-B-6 482 130; DE-A-3 031 313.

The new physical activity that uses this last kind of bicycles (known as "spinning") is made in groups: a certain number of athletes - each of them on his/her own bicycle - works under the strict supervision of the trainer who decides the exercises to be performed and the pedalling speed.

With this view, it appears evident that group work can guarantee excellent results only if the trainer can evaluate the quality of the exercise in real time for each single athlete and, more specifically, the capability of the athletes to comply with the instructions, with special reference to pedalling frequency and consequently the speed reached by the user.

The immediate control from the trainer is also crucial to guarantee the safety of the athletes during the exercise, since it allows to check if the athletes can bear the effort requested by the activity.

In particular, it would be very important for the trainer to discover immediately that the athlete cannot keep up with the pedalling rhythm to understand that physical effort is higher than his/her physical capabilities with consequent overworking with possible dangerous consequences, such as for example an abnormal increase of his/her heart rate.

However, the current models of spin-bikes do not allow for this type of instantaneous and "centralised" verification from the trainer.

They can show the pedalling frequency value (or the speed reached by the user) on a display associated with the handlebar. However, it appears evident that such a piece of information can be advantageously used only by the specific user of the spin-bike and not by the trainer, although he/she might be interested in checking the pedalling frequency of several athletes simultaneously.

Following this critical evaluation of the current state of the art, the invention has been devised to provide a control principle for training sessions of a group of athletes on spin-bikes, which provides the trainer with the possibility of checking immediately whether the athletes can comply with the instructions given by the trainer.

The selection of the new control principle has been conditioned by the need to avoid increasing the weight of spin-bikes with sophisticated devices, since this type of bikes must be always minimal, light and easy to use.

In particular, the invention makes use of the spin-bike flywheel to acquire information on the user's pedalling rhythm in real time, because the flywheel is very visible from a certain distance in view of the essential structure typical of modern spin-bikes.

The spin-bike of the invention is characterised in that the flywheel is suitably provided with some radial marks and receives the stroboscopic light emitted by a series of LED's located in a circle in front of the flywheel and directed onto the reflecting marks by an optical prism.

The spin-bike of the invention must be equipped with an electronic control unit used to check the flywheel speed and generate the switching on frequency of the LED's to obtain the stroboscopic effect.

Before using the spin-bike, the athlete must set the control unit at the desired speed, which corresponds to a certain angular speed of the flywheel.

As soon as the athlete starts pedalling, the control unit starts to monitor the flywheel speed and, simultaneously, generates a switching on frequency of the LED's equal to the angular speed of the flywheel, should the athlete respect the instructions given by the trainer on the speed to be maintained.

Should this condition occur (i.e. the athlete manages to maintain the predefined flywheel rotation frequency), because of a visual effect, the human
eyes can discriminate the marks on the flywheel, just as if the flywheel was still.

It appears evident that the trainer will be able to check the execution mode of the exercise performed by the athletes under his/her supervision in real time by simply looking at the flywheel to see if they are maintaining the predefined speed.

In particular, the trainer can be sure that all the athletes are maintaining the predefined angular speed in case of "virtual immobility" of the flywheels of the spin-bikes.

Should the athlete reduce the pedalling rhythm, the angular speed of the flywheel will become lower that the switching on frequency of the LED's; in this case the optical effect produced will be an inverse rotation of the reflecting marks of the flywheel with respect to pedal rotation, as if the flywheel was turning backwards.

On the contrary, should the athlete maintain a pedalling rhythm higher than the predefined one, because of the optical effect produced, the reflecting marks will rotate in the same rotation direction as the pedals, just as if the entire flywheel turned forward.

The trainer will be able to use these two "optical effects" to identify the users in the group who are not able to maintain the predefined pedalling rhythm or who are pedalling at a higher rhythm.

For major clarity the description of the invention continues with reference to the enclosed drawings, which are intended for purposes of illustration only and not in a limiting sense, whereby:
- Fig. 1 is the block diagram of the installation that provides the gym bike of the invention with remote optical monitoring as mentioned above;
- Fig. 2 and 3 are a front and a side view of the flywheel of the bike of the invention, respectively.

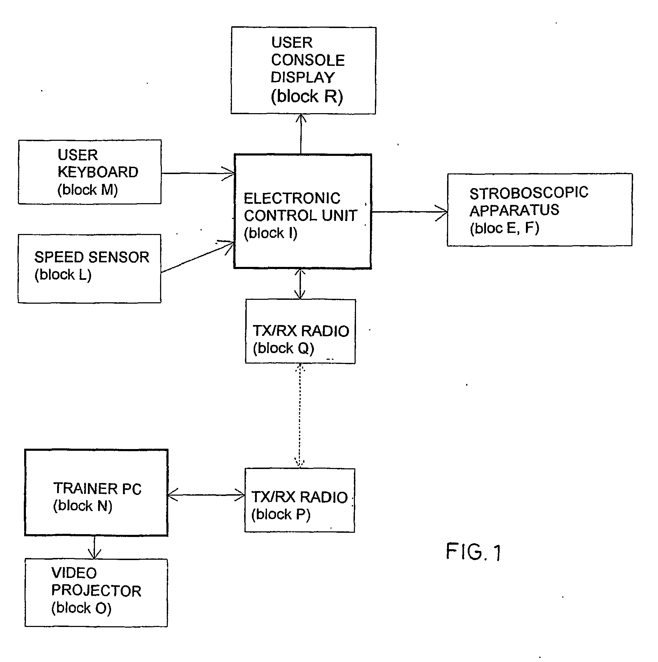

With reference to Fig. 1, the gym bike of the invention is equipped with an electronic control unit (I) used to check the speed of the flywheel (D) and generate the switching on frequency of the LED's to obtain the stroboscopic effect.
The electronic control unit (I) is programmed with the speed of the flywheel (D) of the spin-bike according to the type of exercise that must be carried out by the athletes under the trainer's supervision.

This parameter can be set on the electronic control unit by the user in manual mode by means of a keyboard (M) provided on the spin-bike, or in automatic mode if the piece of information is transmitted by a centralised computer (N) used by the trainer to all the spin-bikes under his/her supervision.

The athlete can check the parameters and execution modes of the exercise by means of a standard display (R) associated with the keyboard (M) and connected to the control unit (I).

The transmission of information from the centralised computer (N) of the trainer to each spin-bike of the athletes is preferably performed in wireless mode, meaning by means of suitable two-way radio transmitters, of which one (Q) is installed on each spin-bike and the other one (P) is installed on the centralised computer (N) of the trainer.

After receiving the parameter of the speed of the flywheel (D), the electronic control unit (I) starts to monitor the speed thanks to a sensor (L), suitably interfaced with the flywheel. By means of his/her own display (R), the user can immediately check the current speed of the flywheel (D) and the speed that the flywheel should maintain to comply with the trainer's instructions.

At the same time, it allows for generating a switching on frequency for the LED's (F) used for stroboscopic effect, whose luminous emissions are directed onto the face of the flywheel (D) with reflecting marks (H) on the perimeter border thanks to the presence of a suitable optical prism.

As mentioned earlier, the stroboscopic effects becomes immediately visible on the flywheel (D) by simply looking at the movements of the marks (H) on the flywheel (D). As a matter of fact, the marks will appear to be still if the angular speed of the flywheel (D) is equal to the electronically determined switching on frequency of the LED's (F). On the contrary, the marks will appear to rotate backwards or forward if the angular speed of the flywheel (D) is respectively lower or higher than the switching on frequency of the LED's (F).

The electronic control unit (I) can be enabled to send the acquired data on the execution modes of each spin-bike to the central computer (N) that will project on a giant screen the image (in digital format) of the marks (H) of the flywheels (D) of all the exercise parameter by means of a video projector system (0).

In this way the pedalling rhythm of each athlete becomes visible for anybody who is supervising the training session of the group (trainer, public, other athletes who are waiting to start their training session).

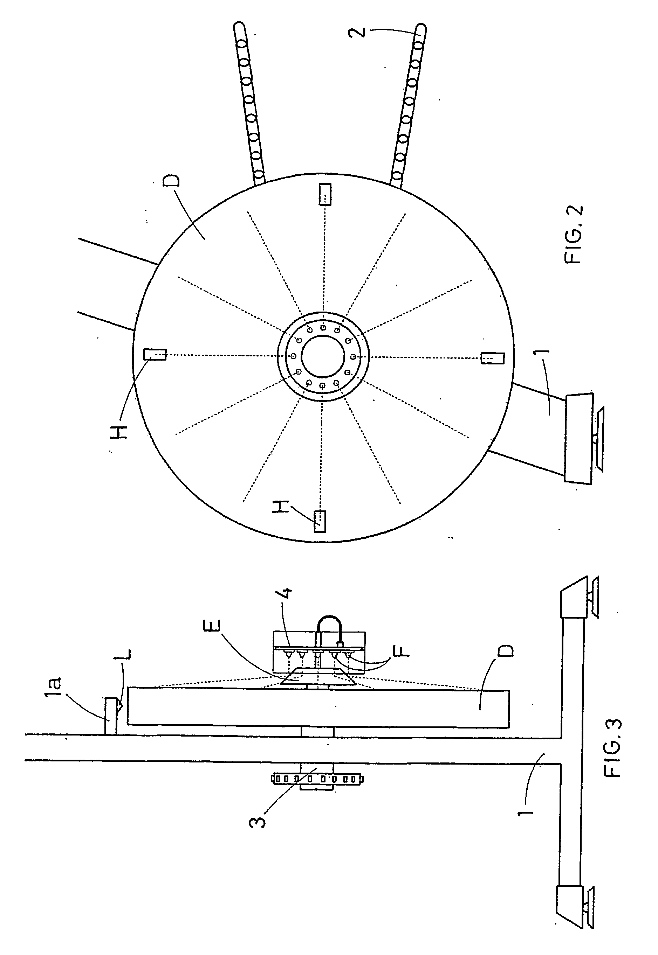

As mentioned earlier, Figs. 2 and 3 illustrate the structure of the spin-bike provided with "visual" monitoring function according to the present invention.

The bike has a traditional tubular frame (1) that supports a flywheel (D) driven into rotation by the user by means of pedals and a traditional chain (2).

The flywheel (D) rotates together with a shaft with horizontal axis (3) supported by the tubular frame (1) where the pinion (4) - on which the chain (2) is engaged - is joined.

The frame (1) is also provided with a shelf (1a) used to support a sensor (L) in a useful position in order to detect the rotation of the perimeter border of the flywheel (D).

A fixed optical prism (E) with circular plan is mounted in opposite position to the external side of the flywheel (D), and a fixed disk (4) is mounted in external position, provided with LED's (F) with electronic circuit on the perimeter; it being provided that both the prism (E) and the disk (4) have a parallel concentric position with respect to the flywheel (1).

The same external side of the flywheel (D) is provided with some marks (H) located on the perimeter border and capable of reflecting the light produced by the LED's (F).

The structure and the position of the optical prism (E) between the flywheel (D) and the disk (4) that supports the LED's (F) must be such that, when the LED's (F) switch on, the light emitted by the LED's can be directed onto the reflecting marks (H) of the flywheel (D).

In particular, the model of flywheel shown in Fig. 2 is provided with four marks (H) located at 90° intervals, although a different number of marks can be used, at regular intervals, since the number of visible marks on the flywheel in virtual immobility condition depends on the electronically defined scanning frequency.

For example, if the predefined angular speed of the flywheel (D) is set at 60 rpm, if the flywheel rotates at the set speed and the light impulses generated by the LED's (F) have a frequency equal to the predefined angular speed of the flywheel (D), the human eyes can discriminate a number of marks (H) equal to the number of marks on the flywheel (D).

On the contrary, if the control unit (I) is set to enable a switching on frequency of the LED's (F) double than the predefined angular speed of the flywheel (D), the human eyes can discriminate a number of marks double than the number of marks on the flywheel (D) and half of the marks if the control unit (I) is set with a switching on frequency of the LED's (F) that is equal to half of the angular speed of the flywheel.

However, it must be noted that these last two possibilities depend on the possibility that the control unit (I) enables a switching on frequency of the LED's (F) that corresponds to multiple or submultiple whole numbers of the angular speed of the flywheel (D) set from time to time.

## Claims

1. Gym bike of the type provided with a flywheel (D) actuated by pedals and an electronic control unit (I), interfaced to a suitable keyboard (M) and display (R), capable of measuring the speed of the flywheel (D) by means of a sensor (L) and show it on the display (R), **characterised by** the fact that, once the speed that the user should maintain during the training session has been set on the control unit (I), the control unit (I) can enable the operation of a stroboscopic light according to a switching on frequency equal to the angular speed or multiple or sub-multiple whole numbers of the speed that the flywheel (D) should maintain to keep the predetermined speed of the exercise; it being provided that the stroboscopic light is directed onto one or more reflecting marks (H) mounted on the surface of the flywheel (D).

2. Gym bike as defined in claim 1, **characterised in that** the stroboscopic light is produced by a circular series of LED's (F) applied on a fixed disk (4) mounted in parallel concentric position opposite to the flywheel (D), with the interposition of an optical prism (E) used to direct the light emitted by the LED's (F) towards the perimeter border of the flywheel (D) with the reflecting marks (H).

3. Gym bike as defined in the first or both preceding claims, **characterised in that** the speed to be maintained by the user during pedalling is set on the electronic control unit (I) with the keyboard (M).

4. Gym bike as defined in the first or both preceding claims, **characterised in that** the speed to be maintained by the user during pedalling is set on the electronic control unit (I) starting from a central computer (N) connected to the bike in wireless mode by means of suitable two-way radio transmitters (Q, P).

5. Gym bike as defined in one or more of the preceding claims, **characterised in that** the electronic control unit (I), by means of the transmitter (Q), can send the data on the execution modes of the spin-bike to a central computer (N) that will project on a giant screen (O) the image (in digital format) of the marks (H) of the flywheel (D) of the bike.

## Patentansprüche

1. Stationäres Fahrrad des Typs, der mit einem durch Pedale bewegten Schwungrad (D) sowie einem elektronischen Steuergehäuse (1) ausgestattet ist, das mit einer dazugehörigen Tastatur (M) und einem dazugehörigen Display (R) verbunden ist und dazu dient, mittels eines entsprechenden Sensors (L) die Geschwindigkeit des Schwungrads (D) abzutasten und diese auf dem Display (R) anzuzeigen, **dadurch gekennzeichnet, dass** das elektronische Steuergehäuse (I) nach der hiermit vorgenommenen Einstellung einer bestimmten, vom Benutzer während des Trainings einzuhaltenden Geschwindigkeit in der Lage ist, den Betrieb eines stroboskopischen Lichtes entsprechend einer Einschaltfrequenz freizugeben, die der Winkelgeschwindigkeit oder einem Vielfachen bzw. einem geradzahligen Teil der Winkelgeschwindigkeit entspricht, die das Schwungrad (D) einhalten müsste, um sich an die zuvor eingestellte Trainingsgeschwindigkeit anzupassen, wobei vorgesehen ist, dass das stroboskopische Licht auf eine oder mehrere reflektierende Rasten (H) auftrifft, die auf der Fläche des Schwungrads (D) montiert sind.

2. Stationäres Fahrrad gemäß Anspruch 1, **dadurch gekennzeichnet, dass** das stroboskopische Licht durch eine Reihe rund angeordneter Leds (F) erzeugt wird, die auf einer festen Scheibe (4) angebracht sind, die parallel und konzentrisch gegenüber dem Schwungrad (D) unter Einfügung eines optischen Prismas (E) montiert ist, das dazu dient, das Licht der Leds (F) zum Außenrand des Schwungrads (D) hin abzulenken, auf dem die reflektierenden Rasten (H) angebracht sind.

3. Stationäres Fahrrad gemäß dem ersten oder beiden vorstehenden Ansprüchen, **dadurch gekennzeichnet, dass** die vom Benutzer beim Pedalieren einzuhaltende Geschwindigkeit auf dem elektronischen Steuergehäuse (I) Hilfe der dazugehörigen Tastatur (M) eingestellt wird.

4. Stationäres Fahrrad gemäß dem ersten oder beiden vorstehenden Ansprüchen, **dadurch gekennzeichnet, dass** die vom Benutzer beim Pedalieren einzuhaltende Geschwindigkeit auf dem Steuergehäuse (I) ausgehend von einem Zentralcomputer (N) eingestellt wird, mit dem das Fahrrad mittels entsprechender Sendeempfangsapparate mit Funkfrequenz (Q, P) drahtlos verbunden ist.

5. Stationäres Fahrrad gemäß einem oder mehreren der vorstehenden Ansprüche, **dadurch gekennzeichnet, dass** das elektronische Steuergehäuse (1) mit Hilfe des Sendempfangsapparats (Q) in der Lage ist, Informationen über den Betriebsmodus des Fahrrads an einen Zentralcomputer (N) zu senden, der mit Hilfe eines Videoprojektionssystems (O) das (in digitaler Grafik gewonnene) Bild der Rasten (H) des Schwungrads (D) des stationären Fahrrads auf einen Großbildschirm projiziert.

## Revendications

1. Vélo pour salles de Fitness, du type doté d'un volant (D) activé par des pédales et par une centrale électronique (I), interfacée à un respectif clavier (M) et à un respectif écran (R), centrale en mesure de détecter, par le biais d'un capteur (L) prévu à cet effet, la vitesse du dit volant (D) et de l'afficher sur le dit écran (R), vélo **caractérisé en ce que** la dite centrale électronique (I), alors qu'elle a été programmée avec une vitesse déterminée que l'usager devrait maintenir au cours de son entraînement, est en mesure d'activer le fonctionnement d'une lumière stroboscopique selon une fréquence d'allumage correspondante à la vitesse angulaire, ou à des multiples ou à des sous-multiples entiers de dite vitesse, que le dit volant (D) devrait maintenir pour se conformer à la dite vitesse prédéfinie d'entraînement ; étant prévu que la dite lumière stroboscopique investit une ou plusieurs coches réfléchissantes (H) installées sur la surface du volant même (D).

2. Vélo pour salles de Fitness, selon la revendication 1, **caractérisé en ce que** dite lumière stroboscopique est produite par une série circulaire de diodes (F) appliquées sur un disque fixe (4) qui résulte monté parallèlement et concentriquement en façade du volant (D), avec l'interposition d'un prisme optique (E) apte à dévier la lumière des dites diodes (F) vers le bord du périmètre du dit volant (D) sur lequel sont appliquées les dites coches réfléchissantes (H).

3. Vélo pour salles de Fitness, selon la première ou les deux revendications précédentes, **caractérisé en ce que** la dite vitesse que l'usager doit maintenir en pédalant est programmée sur la dite centrale électronique (I) par le biais du relatif clavier (M).

4. Vélo pour salles de Fitness, selon la première ou les deux revendications précédentes, **caractérisé en ce que** la dite vitesse que l'usager doit maintenir en pédalant est programmée sur la dite centrale électronique (I) depuis un ordinateur central (N) avec lequel le vélo résulte branché en mode "wireless", c'est-à-dire sans fil, par le biais de respectifs appareils émetteurs-récepteurs à radiofréquence (Q, P).

5. Vélo pour salles de Fitness, selon l'une ou plusieurs des revendications précédentes, **caractérisé en ce que** la dite centrale électronique (I), par le biais du dit appareil émetteur-récepteur (Q), a la capacité d'adresser les renseignements relatifs aux modalités de fonctionnement du vélo à un ordinateur central (N) qui, par le biais d'un système de vidéo projection (O), projette sur un grand écran l'image (réalisée sous forme de graphique numérique) des coches (H) du volant (D) du vélo.
